# EUROPEAN PATENT SPECIFICATION

(11) **EP 3 955 700 B1**
(45) Date of publication and mention of the grant of the patent: **27.08.2025**
(21) Application number: 19923067.3
(22) Date of filing: 29.03.2019
(51) Int. Cl.: H04W 48/16

(54) **REPORTING OF INFORMATION IN A BEAM FAILURE RECOVERY PROCEDURE**
MELDUNG VON INFORMATIONEN IM RAHMEN EINES VERFAHRENS ZUR WIEDERHERSTELLUNG VON STRAHLENAUSFÄLLEN
COMMUNICATION D'INFORMATIONS DANS LE CADRE D'UNE PROCÉDURE DE RÉTABLISSEMENT D'UNE DÉFAILLANCE DE FAISCEAU

(43) Date of publication of application: 16.02.2022
(73) Proprietor: NTT DOCOMO, INC., Chiyoda-Ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); HOU, Xiaolin, Beijing 100190 (CN)
(74) Representative: Hoffmann Eitle
(86) International application number: PCT/JP2019/014361
(87) International publication number: WO 2020/202400

(56) References cited:
- WO-A1-2018/232090
- US-A1- 2018 302 889
- QUALCOMM: "Beam failure recovery procedure", vol. RAN WG1, no. Sanya, China; 20180416 - 20180420, 7 April 2018 (2018-04-07), XP051414144, Retrieved from the Internet <URL:http://www.3gpp.org/ftp/tsg%5Fran/WG1%5FRL1/TSGR1%5F92b/Docs/> [retrieved on 20180407]
- INTEL CORPORATION: "Discussion for Mechanism to Recover from Beam Failure", 3GPP DRAFT; R1-1712552, 25 August 2017 (2017-08-25), Prague, P.R. Czechia, pages 1 - 9, XP051315368
- NEC: "Discussion on beam failure recovery", 3GPP DRAFT; R1-1712998, 25 August 2017 (2017-08-25), Prague, Czech Republic, pages 1 - 5, XP051315807

## Description

### Technical Field

The present disclosure relates to a user terminal and a radio communication method in next-generation mobile communication systems.

### Background Art

In Universal Mobile Telecommunications System (UMTS) network, the specifications of Long-Term Evolution (LTE) have been drafted for the purpose of further increasing high speed data rates, providing lower latency and so on (see 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G))," "5G+ (plus)," "New Radio (NR)," "3GPP Rel. 15 (or later versions)," and so on) are also under study.

In existing LTE systems (LTE Rel. 8 to Rel. 14), monitoring of radio link quality (radio link monitoring (RLM)) is performed. When a radio link failure (RLF) is detected by means of RLM, a user terminal (User Equipment (UE)) is required to re-establish RRC (Radio Resource Control) connection.

US 2018/0302889 A1 relates to a method and apparatus for beam recovery in a next generation wireless system.

### Summary of Invention

### Technical Problem

For future radio communication systems (for example, NR), a scheme in which a procedure of detecting a beam failure (BF) and switching to another beam (which may be referred to as a beam failure recovery (BFR) procedure, BFR, or the like) is performed has been under study. In the BFR procedure, when a beam failure occurs, the UE reports a beam failure recovery request (BFRQ), which is for requesting recovery of the beam failure.

In the BFR procedure, a scheme in which the UE reports information related to a candidate beam that is new (also referred to as a new candidate beam) has been under study. By newly configuring a new candidate beam reported from the UE, a network (for example, a base station) can appropriately recover the beam failure.

However, in the BFR procedure, how to perform reporting of the new candidate beam (for example, determination of the new candidate beam, a case in which the new candidate beam cannot be detected, or the like) has not yet been fully studied. Unless the BFR procedure is appropriately performed, deterioration in performance of a system, such as a delay in BFR, may be caused.

In the light of this, the present disclosure has one object to provide a user terminal and a radio communication method capable of appropriately performing a BFR procedure.

### Solution to Problem

The problem is solved by the subject-matter of the independent claims. The description exemplifies how to carry out the present invention.

### Advantageous Effects of Invention

According to one aspect of the present disclosure, the BFR procedure can be appropriately performed.

### Brief Description of Drawings

FIG. 1 is a diagram to show an example of a BFR procedure in Rel. 15 NR;
FIG. 2 is a diagram to show an example of the BFR procedure according to a first aspect;
FIG. 3 is a diagram to show an example of a BFR procedure according to a second aspect;
FIG. 4A and FIG. 4B are each a diagram to show an example of report control of a new candidate beam according to the second aspect;
FIG. 5 is a diagram to show another example of the BFR procedure according to the second aspect;
FIG. 6A and FIG. 6B are each a diagram to show another example of the report control of a new candidate beam according to the second aspect;
FIG. 7A and FIG. 7B are each a diagram to show another example of the report control of a new candidate beam according to the second aspect;
FIG. 8A and FIG. 8B are each a diagram to show an example of a variation of report control of a new candidate beam;
FIG. 9 is a diagram to show another example of the variation of the report control of a new candidate beam;
FIG. 10 is a diagram to show an example of a schematic structure of a radio communication system according to one embodiment;
FIG. 11 is a diagram to show an example of a structure of a base station according to one embodiment;
FIG. 12 is a diagram to show an example of a structure of a user terminal according to one embodiment; and
FIG. 13 is a diagram to show an example of a hardware structure of the base station and the user terminal according to one embodiment.

### Description of Embodiments

### <Beam Failure Recovery>

For NR, performing communication by using beamforming has been under study. For example, a UE and a base station (for example, a gNodeB (gNB)) may use a beam (also referred to as a transmit beam, a Tx beam, or the like) that is used for transmission of a signal and a beam (also referred to as a receive beam, an Rx beam, or the like) that is used for reception of a signal.

When beamforming is used, there is more influence of disturbance due to an obstruction, and thus it is assumed that radio link quality is deteriorated. Due to the deterioration of the radio link quality, radio link failure RLF (Radio Link Failure (RLF)) may frequently occur. When RLF occurs, reconnection with a cell is required, and thus frequent occurrence of RLF leads to deterioration of system throughput.

For NR, in order to prevent occurrence of RLF, the following scheme has been under study: when quality of a specific beam is deteriorated, a procedure of switch to another beam (which may be referred to as beam recovery (BR), beam failure recovery (BFR), L1/L2 (Layer 1/Layer 2) beam recovery, or the like) is performed. Note that the BFR procedure may be simply referred to as BFR.

Note that a beam failure (BF) in the present disclosure may be referred to as a link failure or a radio link failure (RLF).

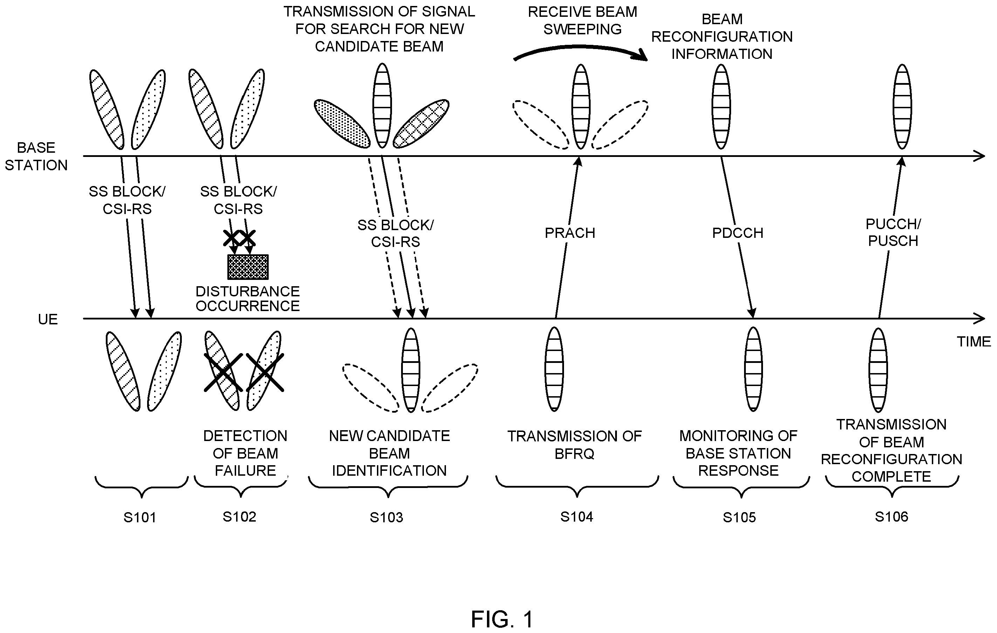

FIG. 1 is a diagram to show an example of a beam recovery procedure in Rel. 15 NR. The number of beams and the like are merely an example, and this is not restrictive. In the initial state (Step S101) of FIG. 1, the UE performs measurement based on reference signal (RS) resources that are transmitted using two beams.

The RS may be at least one of a synchronization signal block (SSB) and an RS for channel state measurement (Channel State Information RS (CSI-RS)). Note that the SSB may be referred to as an SS/PBCH (Physical Broadcast Channel) block or the like.

The RS may be a signal that is configured by, for example, enhancing or changing at least one of a primary synchronization signal (Primary SS (PSS)), a secondary synchronization signal (Secondary SS (SSS)), a mobility reference signal (Mobility RS (MRS)), a signal included in an SSB, an SSB, a CSI-RS, a demodulation reference signal (DMRS), a beam-specific signal, and the like, or these. The RS measured in Step S101 may be referred to as an RS for beam failure detection (Beam Failure Detection RS (BFD-RS)) or the like.

In Step S102, the radio wave from the base station is disturbed, and thus the UE cannot detect the BFD-RS (or received quality of the RS is deteriorated). Such disturbance may occur due to an obstruction, fading, interference, or the like between the UE and the base station, for example.

When a certain condition is satisfied, the UE detects a beam failure. For example, when a block error rate (BLER) is less than a threshold regarding all of the configured BFD-RSs (BFD-RS resource configurations), the UE may detect occurrence of a beam failure. When occurrence of a beam failure is detected, a lower layer (physical (PHY) layer) of the UE may report (indicate) a beam failure instance to a higher layer (MAC layer).

Note that a criterion of the determination is not limited to the BLER, and may be reference signal received power in the physical layer (Layer 1 Reference Signal Received Power (L1-RSRP)). Instead of RS measurement or in addition to RS measurement, beam failure detection may be performed based on a downlink control channel (Physical Downlink Control Channel (PDCCH)) or the like. It may be expected that the BFD-RS is quasi-co-located (Quasi-Co-Location (QCL)) with the DMRS of the PDCCH monitored by the UE.

Here, QCL is an indicator indicating statistical properties of the channel. For example, when a certain signal/channel and another signal/channel are in a relationship of QCL, it may be indicated that it is assumable that at least one of Doppler shift, a Doppler spread, an average delay, a delay spread, and a spatial parameter (for example, a spatial reception filter/parameter (Spatial Rx Filter/Parameter) or a spatial transmission filter/parameter (Spatial Tx Filter/Parameter) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as spatial QCL (sQCL).

Information related to the BFD-RS (for example, an index, a resource, a number, the number of ports, precoding, and the like of the RS), information related to beam failure detection (BFD) (for example, the threshold described above), and the like may be configured for (reported to) the UE by using higher layer signaling or the like. The information related to the BFD-RS may be referred to as information related to a resource for BFR or the like.

In the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

When the MAC layer of the UE receives a beam failure instance report from the PHY layer of the UE, the MAC layer may start a certain timer (which may be referred to as a beam failure detection timer). When the MAC layer of the UE receives the beam failure instance report a certain number of times (for example, beamFailureInstanceMaxCount that is configured in the RRC) or more by the time the timer expires, the MAC layer may trigger the BFR (for example, start any one of random access procedures to be described later).

When the base station receives no report from the UE (for example, a period of time in which the base station receives no report exceeds a certain period of time), or when the base station receives a certain signal (beam recovery request in Step S104) from the UE, the base station may determine that the UE has detected a beam failure.

In Step S103, for the sake of beam recovery, the UE starts search for a new candidate beam to be used for new communication. The UE may select a new candidate beam corresponding to the RS by measuring a certain RS. The RS measured in Step S103 may be referred to as an RS for new candidate beam identification (New Candidate Beam Identification RS (NCBI-RS)), a CBI-RS, a Candidate Beam RS (CB-RS), or the like. The NCBI-RS may be the same as or different from the BFD-RS. Note that the new candidate beam may be simply referred to as a candidate beam or a new beam.

The UE may determine a beam that satisfies a certain condition and corresponds to the RS, as the new candidate beam. For example, the UE may determine the new candidate beam, based on the RS whose L1-RSRP exceeds a threshold, out of the configured NCBI-RSs.

Information related to the NCBI-RS (for example, a resource, a number, the number of ports, precoding, and the like of the RS), information related to new candidate beam identification (NCBI) (for example, the threshold described above), and the like may be configured for (reported to) the UE by using higher layer signaling or the like. The information related to the NCBI-RS may be acquired based on the information related to the BFD-RS. The information related to the NCBI-RS may be referred to as information related to a resource for NCBI or the like.

Note that the BFD-RS, the NCBI-RS, or the like may be interpreted as a radio link monitoring reference signal (RLM-RS (Radio Link Monitoring RS)).

In Step S104, the UE that has identified the new candidate beam transmits a beam recovery request (Beam Failure Recovery reQuest (BFRQ)). The beam recovery request may be referred to as a beam recovery request signal, a beam failure recovery request signal, or the like.

For example, the BFRQ may be transmitted by using at least one of an uplink control channel (Physical Uplink Control Channel (PUCCH)), a random access channel (Physical Random Access Channel (PRACH)), an uplink shared channel (Physical Uplink Shared Channel (PUSCH)), and a configured grant PUSCH.

The BFRQ may include information of the new candidate beam that is identified in Step S103. A resource for the BFRQ may be associated with the new candidate beam. Information of the beam may be reported by using a beam index (BI), a port index of a certain reference signal, a resource index (for example, a CSI-RS resource indicator (CRI) or an SSB resource indicator (SSBRI)), or the like.

In Rel. 15 NR, CB-BFR (Contention-Based BFR) being BFR based on a contention-based random access (RA) procedure and CF-BFR (Contention-Free BFR) being BFR based on a non-contention-based random access procedure have been under study. In the CB-BFR and the CF-BFR, the UE may transmit a preamble (also referred to as an RA preamble, a random access channel (Physical Random Access Channel (PRACH)), a RACH preamble, or the like) as the BFRQ by using a PRACH resource.

In NR, a plurality of PRACH formats (PRACH preamble formats) have been under study. The Random Access (RA) preamble using each PRACH format includes RACH OFDM symbols. In addition, the RA preamble may include at least one of a cyclic prefix (CP) and a guard period (GP). For example, PRACH formats 0 to 3 use a preamble sequence of a long sequence in the RACH OFDM symbols. PRACH formats A1 to A3, B1 to B4, C0, and C2 use a preamble sequence of a short sequence in the RACH OFDM symbols.

The frequency of the carrier may be within a frequency range of any one of Frequency Range (FR) 1 and FR 2. FR 1 may be a frequency range lower than a certain frequency, and FR 2 may be a frequency range higher than the certain frequency.

The RA preamble sequence may be a Zadoff-Chu (ZC) sequence. A preamble sequence length may be any one of 839 (long sequence) and 139. The preamble sequence may be mapped to frequency resources (for example, subcarriers) assigned to the PRACH. The RA preamble may use one of a plurality of numerologies. The subcarrier spacing (SCS) for the long sequence of FR 1 of NR may be any one of 1.25 kHz and 5 kHz. The SCS for the short sequence of FR 1 of NR may be any one of 15 kHz and 30 kHz. The SCS for the short sequence of FR 2 of NR may be any one of 60 kHz and 120 kHz. The SCS for the long sequence of LTE may be 1.25 kHz. The SCS for the short sequence of the LTE may be 7.5 kHz.

In the CB-BFR, the UE may transmit a preamble that is randomly selected out of one or a plurality of preambles. In contrast, in the CF-BFR, the UE may transmit a preamble that is individually assigned to the UE from the base station. In the CB-BFR, the base station may assign the same preamble to a plurality of UEs. In the CF-BFR, the base station may assign a preamble to the UE individually.

Note that the CB-BFR and the CF-BFR may be referred to as CB PRACH based BFR (contention-based PRACH-based BFR (CBRA-BFR)) and CF PRACH based BFR (contention-free PRACH-based BFR (CFRA-BFR)), respectively. The CBRA-BFR may be referred to as CBRA for BFR. The CFRA-BFR may be referred to as CFRA for BFR.

In any of the CB-BFR and the CF-BFR, information related to a PRACH resource (RA preamble) may be reported by using, for example, higher layer signaling (RRC signaling or the like). For example, the information may include information indicating correspondence between a detected DL-RS (beam) and a PRACH resource, or a different PRACH resource may be associated with each DL-RS.

The uplink control channel allows more flexible configuration of resources in the time domain than the PRACH. Thus, it is also conceivable to use the uplink control channel (PUCCH) as a channel used for transmission of the BFRQ. The MAC CE and the PUSCH allow more flexible configuration of resources in the time domain than the PRACH. Thus, it is also conceivable to use the MAC CE and the PUSCH as a channel used for transmission of the BFRQ.

In Step S105, the base station that has detected the BFRQ transmits a response signal (which may be referred to as a gNB response or the like) for the BFRQ from the UE. The response signal may include reconfiguration information (for example, configuration information of a DL-RS resource) regarding one or a plurality of beams.

The response signal may be transmitted in a UE common search space of the PDCCH, for example. The response signal may be reported by using the PDCCH (DCI) including a cyclic redundancy check (CRC) that is scrambled with an identifier of the UE (for example, a cell-radio RNTI (C-RNTI)). The UE may determine at least one of a transmit beam and a receive beam to be used, based on beam reconfiguration information.

The UE may monitor the response signal, based on at least one of a control resource set (CORESET) for BFR and a search space set for BFR. For example, in a BFR search space in the CORESET that is individually configured, the UE may detect the DCI including the CRC that is scrambled with the C-RNTI.

Regarding the CB-BFR, when the UE receives the PDCCH corresponding to the C-RNTI that is related to the UE itself, the UE may determine that contention resolution has succeeded.

Regarding the processing of Step S105, a period for the UE to monitor a response for the BFRQ from the base station (for example, the gNB) may be configured. The period may be referred to as, for example, a gNB response window, a gNB window, a beam recovery request response window, a BFRQ response window, or the like. When there is no gNB response detected in the window period, the UE may perform retransmission of the BFRQ.

In Step S106, the UE may transmit a message indicating that beam reconfiguration has been completed for the base station. For example, the message may be transmitted on the PUCCH, or may be transmitted on the PUSCH.

In Step S106, the UE may receive RRC signaling indicating configuration of a TCI state used for the PDCCH, or may receive the MAC CE indicating activation of the configuration.

Beam recovery success (BR success) may indicate a case that the processing has reached Step S106, for example. In contrast, beam recovery failure (BR failure) may correspond to a fact that, for example, the number of times of BFRQ transmission has reached a certain number of times, or a beam failure recovery timer (Beam-failure-recovery-Timer) has expired.

Note that the numbers of these steps are merely numbers for the sake of description, and a plurality of steps may be put together, or the order thereof may be changed. Whether or not the BFR is performed may be configured for the UE by using higher layer signaling.

As described above, in the existing BFR procedure, the new candidate beam is determined based on the RS whose L1-RSRP exceeds a threshold out of configured RSs (NCBI-RSs) for new candidate beam identification. At the same time, in order to appropriately perform selection of the new candidate beam, it is preferable to take not only received power but also interference power into consideration.

In the light of this, the inventors of the present invention came up with the idea of determination operation of the new candidate beam for more appropriately performing selection of the new candidate beam. For example, the inventors of the present invention came up with the idea of configuring a plurality of determination criteria (or criteria) for determining the new candidate beam, and thereby controlling determination of the new candidate beam, based on at least one of the determination criteria.

When there is an RS whose L1-RSRP exceeds a threshold out of the configured NCBI-RSs, the new candidate beam can be determined. However, it is also conceivable that there is no RS whose L1-RSRP exceeds the threshold. In this case, how to control report operation of the new candidate beam in the BFR procedure or the like poses a problem.

In the light of this, the inventors of the present invention came up with the idea of report operation of the new candidate beam when the new candidate beam cannot be identified (or, there is no new candidate beam) in the BFR procedure.

An embodiment according to the present disclosure will be described in detail below with reference to the drawings. Each of the aspects below may be applied individually, or may be applied in combination.

In the following description, application is possible to BFR in an SCell (BFR on SCell) as well as in a PCell. In the present disclosure, an SCell that supports BFR on SCell may be interpreted as an SCell to which BFR on SCell can be applied. The SCell to which BFR on SCell is applied may be interpreted as a BFR-SCell, an SCell for BFR, or the like. The number of SCells to which BFR on SCell is applied may be interpreted as the number of BFR-SCells. The number of SCells that support BFR on SCell may be interpreted as the maximum number of BFR-SCells.

### (First Aspect)

In a first aspect, a plurality of determination criteria can be configured for determining a new candidate beam, and a new candidate beam to be reported in the BFR procedure is determined based on at least one determination criterion.

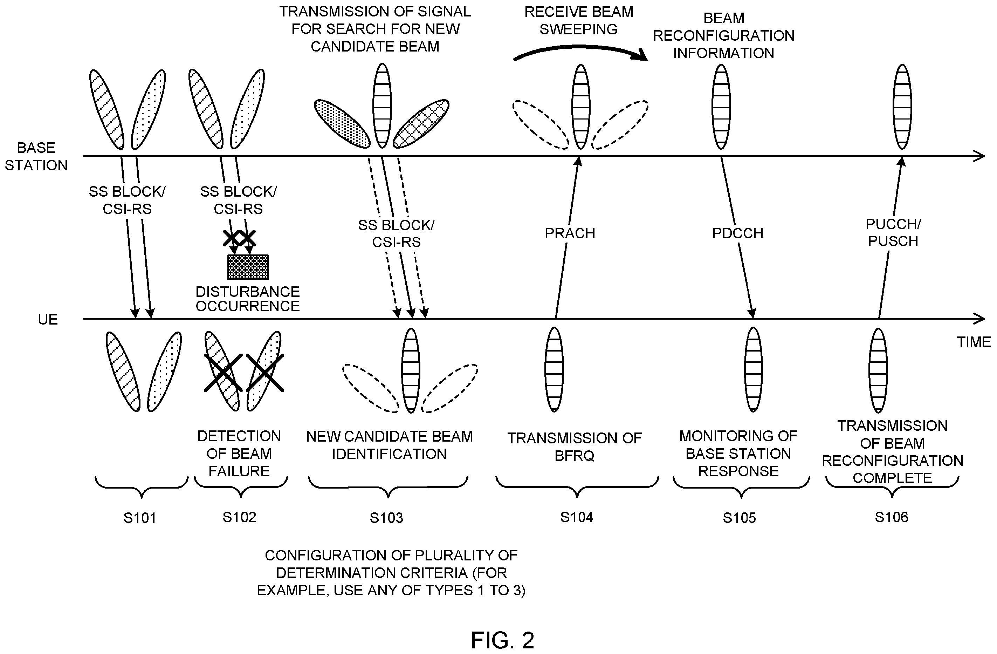

The description herein takes an example of a case in which a determination criterion corresponding to received power (type 1), a determination criterion corresponding to interference power (type 2), and a combination of the determination criterion corresponding to received power and the determination criterion corresponding to interference power (type 3) are configured as the plurality of determination criteria (see FIG. 2). However, the determination criteria are not limited thereto. For example, two types, namely type 1 and type 2, may be configured for the UE, and the UE for which type 1 and type 2 are configured may perform control as type 3 described below. Note that the steps other than S103 in FIG. 2 may be controlled in a manner similar to FIG. 1.

### <Type 1>

Type 1 corresponds to the determination criterion corresponding to received power, and may be RSRP, for example. The RSRP may be RSRP corresponding to layer 1 (L1-RSRP), or may be RSRP corresponding to layer 3 (L3-RSRP). The following description is given by taking an example of L1-RSRP, but L1-RSRP may be replaced with L3-RSRP.

When an RS for the new candidate beam and a corresponding threshold are configured, and at least one channel quality (for example, L1-RSRP of the configured RS) of the new candidate beam is equal to or greater than the threshold, the UE reports information related to the new candidate beam in the BFR procedure.

The UE may assume that the threshold of RSRP for new candidate beam identification is configured. The threshold may be configured with any one of the following methods.

### [Configuration Method 0]

A method the same as the configuration method of the threshold defined in Rel. 15 is used. For example, the threshold may be configured for the UE from the base station by using higher layer signaling (for example, rsrp-ThresholdSSB).

### [Configuration Method 1]

The threshold may be configured with an absolute value of RSRP. For example, the threshold may be configured by using 7 bits within a range of [-140, -44] dBm with 1 dBm step size.

### [Configuration Method 2]

The threshold may be defined as a fixed value (for example, - 120 dBm) in a specification.

### [Configuration Method 3]

The threshold may be configured as a difference (or, an offset) of an RSRP value from a certain value X. The certain value X may be, for example, a maximum value of L1-RSRP measured or reported by the UE regarding a serving cell (for example, the SCell). The certain value X may be the latest measurement value or report value before the beam failure detection (BFD) or the BFR procedure is performed.

Alternatively, the certain value X may be, for example, a maximum value of L1-RSRP measured or reported by the UE regarding a certain cell (for example, the PCell or the PSCell). The certain value X may be the latest measurement value or report value before the beam failure detection (BFD) or the BFR procedure is performed.

For example, when the certain value X is -20 dBm, the threshold may be configured by reporting a difference (or an offset) from the certain value X. In this manner, the number of bits used for configuration of the threshold can be reduced.

When the L1-RSRP is used as the determination criterion, at least one of the SSB and the CSI-RS may be used as the RS for new candidate beam identification. L1-RSRP related to the SSB may be referred to as SS-RSRP. L1-RSRP related to CSI-RS may be referred to as CSI-RSRP. The SSB and the CSI-RS (a resource, a threshold, or the like) may be separately configured for the UE.

For example, when the SSB and the CSI-RS are configured as the RS for new candidate beam identification, a threshold of any one of the SSB and the CSI-RS may be configured by using higher layer signaling or the like. For example, when a threshold corresponding to the SSB is configured, a threshold corresponding to the CSI-RS may be determined based on the threshold corresponding to the SSB. A scaling factor (or an offset) from the threshold corresponding to the SSB may be defined in advance in a specification, or may be configured from the base station to the UE by using higher layer signaling or the like.

### <Type 2>

Type 2 corresponds to the determination criterion corresponding to interference power, and may be an SINR (signal to noise interference power ratio), for example. The SINR may be an SINR corresponding to layer 1 (L1-SINR), or may be an SINR corresponding to layer 3 (L3-SINR). The following description is given by taking an example of L1-SINR, but L1-SINR may be replaced with L3-SINR.

When an RS for the new candidate beam and a corresponding threshold are configured, and at least one channel quality (for example, an L1-SINR of the configured RS) of the new candidate beam is equal to or greater than the threshold, the UE reports information related to the new candidate beam in the BFR procedure.

The UE may assume that the threshold of an SINR for new candidate beam identification is configured. The threshold may be configured with any one of the following methods.

### [Configuration Method 1]

The threshold may be configured with an absolute value of an SINR. For example, the threshold may be configured by using x bits within a range of [-50, 50] dBm with 1 dBm step size.

### [Configuration Method 2]

The threshold may be defined as a fixed value (for example, 5 dBm) in a specification.

### [Configuration Method 3]

The threshold may be configured as a difference (or an offset) of an SINR value from a certain value X. The certain value X may be, for example, a maximum value of an L1-SINR measured or reported by the UE regarding a serving cell (for example, the SCell). The certain value X may be the latest measurement value or report value before the beam failure detection (BFD) or the BFR procedure is performed.

Alternatively, the certain value X may be, for example, a maximum value of an L1-SINR measured or reported by the UE regarding a certain cell (for example, the PCell or the PSCell). The certain value X may be the latest measurement value or report value before the beam failure detection (BFD) or the BFR procedure is performed.

For example, when the certain value X is -20 dBm, the threshold may be configured by reporting a difference (or an offset) from the certain value X. In this manner, the number of bits used for configuration of the threshold can be reduced.

When the L1-SINR is used as the determination criterion, at least one of the SSB and the CSI-RS may be used as the RS for new candidate beam identification. An L1-SiNR related to the SSB may be referred to as an SS-SINR. An L1-SINR related to CSI-RS may be referred to as a CSI-SINR. The SSB and the CSI-RS (a resource, a threshold, or the like) may be separately configured for the UE.

For example, when the SSB and the CSI-RS are configured as the RS for new candidate beam identification, a threshold of any one of the SSB and the CSI-RS may be configured by using higher layer signaling or the like. For example, when a threshold corresponding to the SSB is configured, a threshold corresponding to the CSI-RS may be determined based on the threshold corresponding to the SSB. A scaling factor (or an offset) from the threshold corresponding to the SSB may be defined in advance in a specification, or may be configured from the base station to the UE by using higher layer signaling or the like.

### <Type 3>

Type 3 corresponds to the combination of the determination criterion corresponding to received power and the determination criterion corresponding to interference power, and may be a combination of the RSRP and the SINR, for example.

When an RS for the new candidate beam and a corresponding threshold are configured, and at least one channel quality (for example, at least one of the L1-SINR and the L1-SINR of the configured RS) of the new candidate beam is equal to or greater than the threshold, the UE reports information related to the new candidate beam in the BFR procedure.

The UE may assume that the threshold of each of the RSRP and the SINR for new candidate beam identification is configured. The threshold may be configured with any one of the methods described in type 1 or type 2. The combination of the threshold corresponding to the L1-RSRP and the threshold corresponding to the L1-SINR may be configured in any one of the following cases.

### [Case 1]

The threshold of the L1-RSRP is configured with an absolute value, and the threshold of the L1-SINR is configured with an absolute value.

### [Case 2]

The threshold of the L1-RSRP is configured with an absolute value, and the threshold of the L1-SINR is configured with a differential value.

### [Case 3]

The threshold of the L1-RSRP is configured with a differential value, and the threshold of the L1-SINR is configured with an absolute value.

### [Case 4]

The threshold of the L1-RSRP is configured with a differential value, and the threshold of the L1-SINR is configured with a differential value.

When both of the L1-RSRP and the L1-SINR are equal to or greater than their respective thresholds, the UE may determine that the new candidate beam satisfies (or clears) a certain determination criterion. In contrast, when only one of the L1-RSRP and the L1-SINR is equal to or greater than its threshold (the other is less than the threshold), the UE may determine that the new candidate beam does not satisfy the certain determination criterion.

In this case, the beam that has cleared both of the determination criterion corresponding to received power and the determination criterion corresponding to interference power is reported as the new candidate beam. Thus, by switching the new candidate beam in the BFR procedure, communication quality can be effectively enhanced.

Alternatively, when at least one of the L1-RSRP and the L1-SINR is equal to or greater than its threshold, the UE may determine that the new candidate beam satisfies (or clears) a certain determination criterion. In contrast, when both of the L1-RSRP and the L1-SINR are less than their respective thresholds, the UE may determine that the new candidate beam does not satisfy the certain determination criterion.

When the L1-SINR and the L1-SINR are used as the determination criterion, the same type of RS (for example, at least one of the SSB and the CSI-RS) may be used as the RS for new candidate beam identification. The SSB and the CSI-RS (a resource, a threshold, or the like) may be separately configured for the UE.

For example, the thresholds of the SSB and the CSI-RS corresponding to one of the L1-RSRP and the L1-SINR (for example, L1-RSRP) may be separately configured, and the thresholds of the SSB and the CSI-RS corresponding to the other (for example, L1-SINR) may be configured in common.

When the new candidate beam does not satisfy the configured certain determination criterion (for example, the RS is less than the threshold), the UE may perform control so as to report detection of the beam failure to the network without reporting information related to the new candidate beam.

### <Configuration of Determination Criteria>

In order to determine (or identify) the new candidate beam, the UE may determine which of the determination criteria (or which of the types) is to be configured, based on information reported from the base station. For example, the base station may configure information related to the determination criterion to be used for new candidate beam determination by using higher layer signaling. In addition to the information related to the determination criterion, at least one of information related to the RS to be used and information related to the threshold may be reported.

The base station may configure at least one determination criterion as the determination criterion (or the type). For example, it is only necessary that the base station configure at least type 1 when the base station takes received power into consideration, configure at least type 2 when the base station takes interference power into consideration, and configure type 3 when the base station takes received power and interference power into consideration.

When the UE does not receive the information related to the determination criterion to be used for determination of the new candidate beam from the base station, the UE may determine the determination criterion (type) to be applied, based on certain information. A certain condition may be at least one of the configuration and the type of beam reporting.

For example, when L1-RSRP beam reporting is configured for the UE, type 1 may be applied to new candidate beam determination. Alternatively, when L1-SINR beam reporting is configured for the UE, type 2 may be applied to new candidate beam determination. Alternatively, when both of L1-RSRP beam reporting and L1-SINR beam reporting are configured for the UE, type 3 may be applied to new candidate beam determination.

When beam reporting is not configured for the UE, a certain type (or a default type) may be applied to new candidate beam determination. The certain type may be, for example, type 1. Alternatively, when beam reporting is not configured for the UE, the UE may perform control so as not to perform reporting of the new candidate beam in the BFR of a certain cell (for example, the SCell).

Note that the above description has described a case in which the RSRP and the SINR are used as the determination criteria (types), but this is not restrictive. Another determination criterion (for example, RSRQ or the like) can be configured as well.

### (Second Aspect)

A second aspect will describe report operation of the new candidate beam in the BFR procedure when the UE cannot identify the new candidate beam (or, there is no new candidate beam) that satisfies a certain determination criterion (or not less than a certain threshold). Note that, in the following description, the present invention may be applied to a configuration in which a plurality of determination criteria are configured for determination of the new candidate beam as described in the first aspect, or may be applied to a configuration in which one determination criterion is configured as in the existing systems.

When the UE measures the configured RS and determines that the UE cannot identify the new candidate beam that satisfies a certain determination criterion (or not less than a certain threshold), the UE may report information indicating that the new candidate beam cannot be identified (or, there is no new candidate beam) to the network (for example, the base station) (report operation 1). Alternatively, when the UE determines that the UE cannot identify the new candidate beam that satisfies a certain determination criterion (or not less than a certain threshold), the UE may perform control so as not to report information related to the new candidate beam (report operation 2).

### <Report Operation 1>

When the UE cannot identify the new candidate beam that satisfies a certain determination criterion (or not less than a certain threshold), the UE may report information indicating that the new candidate beam cannot be identified (or, there is no new candidate beam) as the new candidate beam reporting of the certain determination criterion. Note that the following will describe a case in which the UE includes the information indicating that the new candidate beam cannot be identified in the report operation (for example, BFRQ) of the information related to the new candidate beam in the BFR procedure. However, this is not restrictive, and reporting may be performed by using other information or other operation.

### [Use of Certain Bit State]

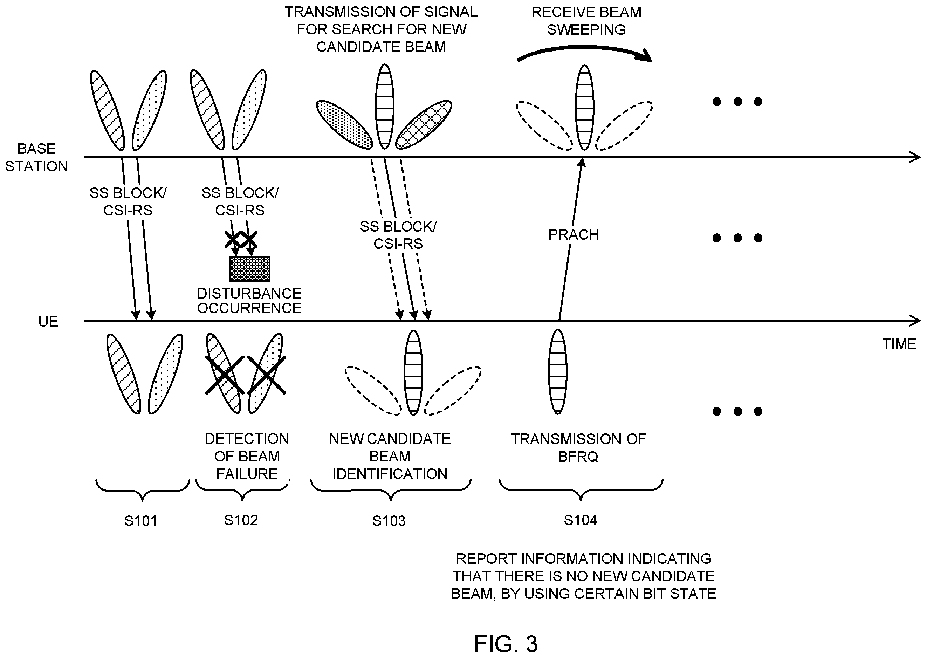

When the information indicating that the new candidate beam cannot be identified is included in at least one of uplink control information (UCI) and MAC control information (MAC CE), reporting may be performed by using a certain bit state (bit state) (see FIG. 3). For example, in a bit field of beam reporting, the information indicating that the new candidate beam cannot be identified may be associated with a certain bit state (or a code point). Note that the steps other than S104 in FIG. 3 may be controlled in a manner similar to FIG. 1 or FIG. 2.

For example, when the information related to the new candidate beam is reported by using 4 bits of the uplink control information, the certain bit state (for example, 0000) may indicate that the new candidate beam is not identified. Other bit state may indicate information related to a new candidate beam index when the new candidate beam is identified.

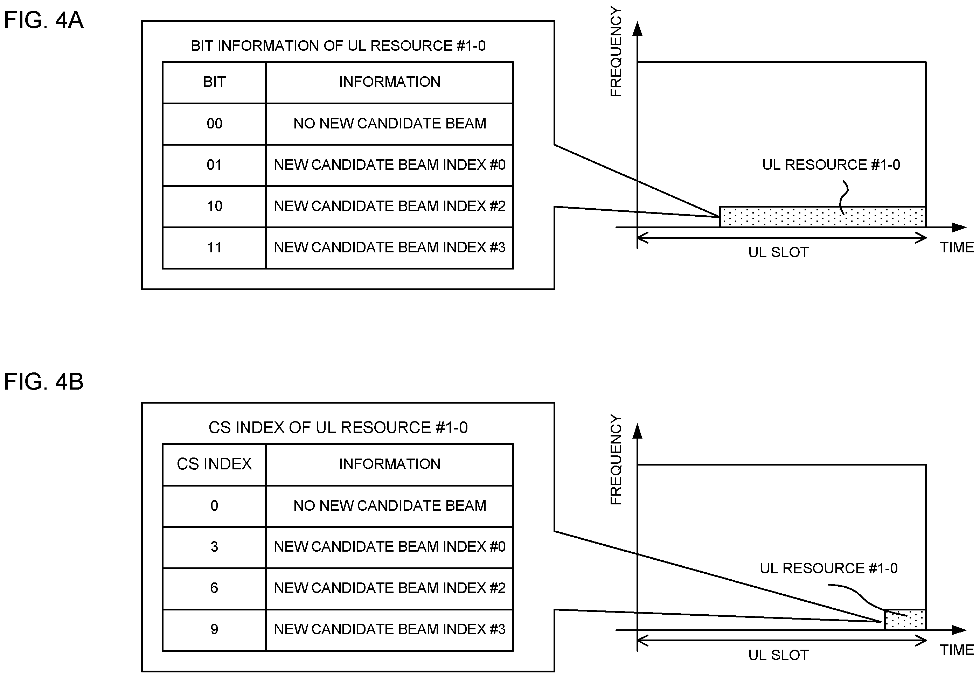

FIG. 4A shows an example of a case in which the UE reports the information indicating that the new candidate beam cannot be identified by using bit information included in the uplink control information or the MAC control information. Here, a case in which the information indicating that the new candidate beam cannot be identified or information indicating a certain new candidate beam index is transmitted by using bit information (or a bit field) of 2 bits is shown. For example, in the bit information of 2 bits, "00" may be associated with the information indicating that the new candidate beam cannot be identified, and "01," "10," and "11" may each be associated with an index of the new candidate beam.

In this case, the UE may transmit the information indicating the new candidate beam (for example, the new candidate beam index) and the information indicating that the new candidate beam cannot be identified by using one UL resource (resource #1-0). The UL resource may be, for example, a PUCCH resource or a PUSCH resource. In other words, the information indicating the new candidate beam and the information indicating that the new candidate beam cannot be identified are transmitted by using a common UL resource.

In this manner, by reporting the fact that the new candidate beam cannot be identified through the use of a specific bit state included in the information related to the new candidate beam, the new candidate beam index and the fact that the new candidate beam cannot be identified can be reported by using one UL resource.

Note that FIG. 4A shows a case in which the information indicating that the new candidate beam is not identified by using a certain bit state. However, the information indicating that the new candidate beam is not identified may be transmitted by being associated with another index (for example, a sequence index or the like). The other index may be a cyclic shift (CS) index that is applied to UL transmission (for example, the PUCCH, the PUSCH, or the PRACH).

FIG. 4B shows an example of a case in which the UE reports the information indicating that the new candidate beam cannot be identified by using a cyclic shift used for UL transmission. Here, a case in which the information indicating that the new candidate beam cannot be identified or the information indicating a certain new candidate beam index is transmitted by using four cyclic shift indexes (CSs #0, #3, #6, and #4) is shown. For example, among the four CS indexes, CS #0 may be associated with the information indicating that the new candidate beam cannot be identified, and CSs #3, #6, and #9 may each be associated with an index of the new candidate beam.

Note that the CS indexes (for example, CS #0 to CS #11) may be assigned indexes that are different from each other between a plurality of UEs (UEs capable of multiplexing).

In this case, the UE may transmit the information indicating the new candidate beam (for example, the new candidate beam index) and the information indicating that the new candidate beam cannot be identified by using one UL resource (resource #1-0). The UL resource may be, for example, a PUCCH resource or a PUSCH resource. In other words, the information indicating the new candidate beam and the information indicating that the new candidate beam cannot be identified are transmitted by using a common UL resource.

By using the CS index, bit information included in the UL resource can be prevented from increasing.

### [Use of Certain UL Resource]

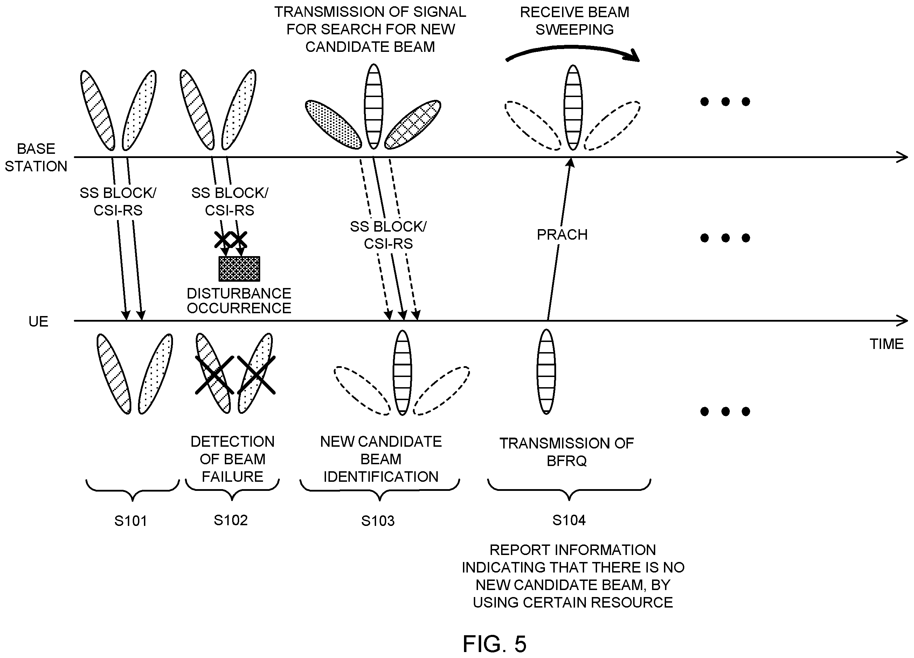

The UE may transmit the information indicating that the new candidate beam cannot be identified, by using resource selection (see FIG. 5). For example, when the UE performs reporting of the new candidate beam by using a certain UL resource, transmission of the information of the index of the new candidate beam and the like and transmission of the information indicating that the new candidate beam cannot be identified may be associated with separate UL resources. Note that the resource may be interpreted as at least one of a symbol, a slot, a resource block (an RB or a PRB), a resource element (RE), a sequence, and a cyclic shift. Note that the steps other than S104 in FIG. 5 may be controlled in a manner similar to FIG. 1 or FIG. 2.

The certain UL resource may be at least one of an uplink control channel (PUCCH) resource used for transmission of the UCI, an uplink shared channel (PUSCH) resource used for transmission of the MAC control information, and a PRACH resource. For example, when the PUCCH resource is used, the UE may use the first PUCCH resource when the UE transmits the information of the new candidate beam index and the like, and may use the second PUCCH resource when the UE transmits the information indicating that the new candidate beam cannot be identified.

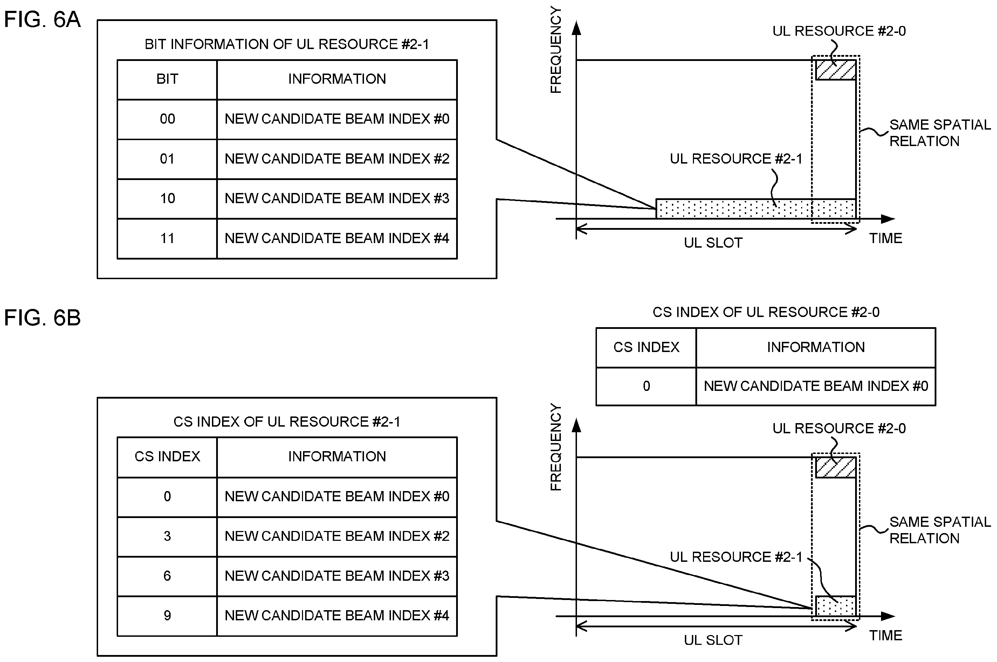

FIG. 6A shows an example of a case in which the UE reports the information indicating that the new candidate beam cannot be identified by using a certain UL resource (for example, a PUCCH resource). Here, the information indicating that the new candidate beam cannot be identified is reported by using PUCCH resource #2-0, and the information related to the new candidate beam index is reported by using PUCCH resource #2-1.

In other words, a case in which the new candidate beam can be identified and a case in which the new candidate beam cannot be identified are associated with different UL resources, and the new candidate beam index is reported by using a plurality of bit states in the UL resource used for the case in which the new candidate beam can be identified.

When the information (for example, 2 bits) related to the new candidate beam index is transmitted by using PUCCH resource #2-1, the new candidate beam index may be associated with each bit state. In this case, the information indicating that the new candidate beam cannot be identified need not be associated with the bit state, and thus reporting of a larger number of new candidate beam indexes can be performed.

When resource #2-0 is configured in the same symbol as resource #2-1 (or a part of resource #2-1), the UE may assume that spatial relation or QCL of resource #2-0 is the same as that of resource #2-1.

For the first UL resource (for example, PUCCH resource #2-0) corresponding to the information indicating that the new candidate beam cannot be identified and the second UL resource (for example, PUCCH resource #2-1) corresponding to the information indicating the new candidate beam index, at least one of a different condition, parameter, and format may be configured.

In NR, a configuration (also referred to as a format, a PUCCH format (PF), or the like) for an uplink control channel (for example, a PUCCH) used for transmission of the UCI is supported. For example, in Rel. 15, support of five types, namely PFs 0 to 4, has been under study. Note that the terms for the PFs described below are merely examples, and different terms may be used.

For example, PFs 0 and 1 are each a PF that is used for transmission of the UCI of up to 2 bits. PF 0 can be assigned to one or two symbols, and is thus also referred to as a short PUCCH. PF 0 uses a sequence based on a cyclic shift according to the UCI, and is thus also referred to as a sequence-based short PUCCH or the like. In contrast, PF 1 can be assigned to 4 to 14 symbols, and is thus also referred to as a long PUCCH or the like. In PF 1, owing to block-wise spreading in the time domain using at least one of a CS and an OCC, a plurality of user terminals may be subjected to code division multiplexing (CDM) in the same physical resource block (also referred to as a PRB (Physical Resource Block), a resource block (RB), or the like).

PFs 2 to 4 are each a PF that is used for transmission of the UCI of more than 2 bits. PF 2 can be assigned to one or two symbols, and is thus also referred to as a short PUCCH or the like. In contrast, PFs 3 and 4 can each be assigned to 4 to 14 symbols, and is thus also referred to as a long PUCCH or the like. In PF 4, a plurality of user terminals may be subjected to CDM by using block-wise spreading in the (frequency domain) before DFT.

For example, separate PUCCH formats (or different PUCCH formats) may be applied to PUCCH resource #2-0 and PUCCH resource #2-1. In view of the fact that that information amount (number of bits) transmitted on PUCCH resource #2-0 can be less than the information amount transmitted on PUCCH resource #2-1, PF 0 or 1 may be applied to PUCCH resource #2-0, and either one of PFs 2 and 3 may be applied to PUCCH resource #2-1. When PF 0 or 1 is used, the multiplexing amount and coverage can be increased in comparison to PFs 3 to 5.

In this manner, by transmitting the information indicating that the new candidate beam cannot be identified by using a plurality of resources, the UL resources can be flexibly configured based on the information to be reported.

Note that FIG. 6A shows a case in which the information related to the new candidate beam index is transmitted by being associated with the bit state. However, the information may be transmitted by being associated with another index (for example, a sequence index or the like). The other index may be a cyclic shift (CS) index that is applied to UL transmission (for example, the PUCCH, the PUSCH, or the PRACH).

FIG. 6B shows an example of a case in which the UE reports the information indicating that the new candidate beam cannot be identified and the information indicating the new candidate beam index by using UL resource selection and a CS index. Here, a case in which the information indicating the new candidate beam index is transmitted by using four cyclic shift indexes (CSs #0, #3, #6, and #4) in resource #2-1 is shown. Note that the information indicating that the new candidate beam cannot be identified may be transmitted by using a certain CS index (here, CS #0) used in a certain UL resource (resource #2-0).

In other words, a case in which the new candidate beam can be identified and a case in which the new candidate beam cannot be identified are associated with different UL resources, and the new candidate beam index is reported by using the CS index in the UL resource used for the case in which the new candidate beam can be identified.

When resource #2-0 is configured in the same symbol as resource #2-1 (or a part of resource #2-1), the UE may assume that spatial relation or QCL of resource #2-0 is the same as that of resource #2-1.

By using the CS index, bit information included in the UL resource can be prevented from increasing.

### [Use of PRACH or SR]

The UE may transmit the information indicating that the new candidate beam cannot be identified, by using resource (for example, symbol) selection that is used for transmission of at least one of the PRACH and the SR.

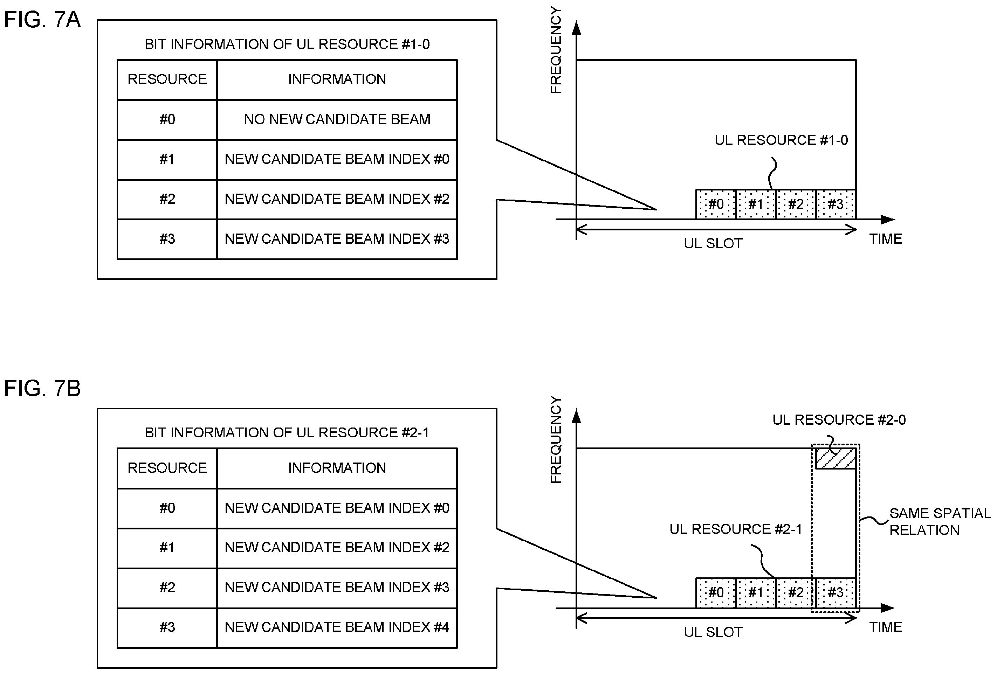

FIG. 7A shows an example of a case in which the UE reports the information indicating that the new candidate beam cannot be identified by using a time domain resource (for example, a symbol) used for UL transmission (for example, at least one of the PRACH and the SR). Here, a case in which the information indicating that the new candidate beam cannot be identified or the information indicating a certain new candidate beam index is transmitted by using four symbols (#0 to #3) is shown. For example, in the four symbols, symbol #0 may be associated with the information indicating that the new candidate beam cannot be identified, and symbols #1 to #3 may each be associated with an index of the new candidate beam.

In this case, the UE may transmit the information indicating the new candidate beam (for example, the new candidate beam index) and the information indicating that the new candidate beam cannot be identified by using one UL resource (resource #1-0). The UL resource may be, for example, a PUCCH resource or a PUSCH resource. In other words, the information indicating the new candidate beam and the information indicating that the new candidate beam cannot be identified are transmitted by using a common UL resource.

FIG. 7B shows an example of a case in which the UE reports the information indicating that the new candidate beam cannot be identified and the information indicating the new candidate beam index by using a time domain resource used for UL resource selection and UL transmission. Here, a case in which the information indicating the new candidate beam index is transmitted by using four symbols (#0 to #3) in resource #2-1 is shown. Note that the information indicating that the new candidate beam cannot be identified may be transmitted by using a certain symbol (here, #3) used for a certain UL resource (resource #2-0).

In other words, a case in which the new candidate beam can be identified and a case in which the new candidate beam cannot be identified are associated with different UL resources, and the new candidate beam index is reported by using the symbol index in the UL resource used for the case in which the new candidate beam can be identified.

When resource #2-0 is configured in the same symbol as resource #2-1 (or a part of resource #2-1), the UE may assume that spatial relation or QCL of resource #2-0 is the same as that of resource #2-1.

When report operation 1 is applied, the fact that the new candidate beam cannot be identified in a certain cell (for example, the SCell) can be reported from the UE to the base station. When the base station knows the fact that an appropriate new candidate beam cannot be identified in the certain cell, the base station may determine that beam failure recovery in the certain cell is unnecessary. In this case, the base station may perform control so as to deactivate the certain cell (SCell). In this manner, by reporting the fact that the new candidate beam cannot be identified from the UE to the base station, the use of a beam or a cell with poor communication quality can be prevented, and communication quality can thus be enhanced.

### <Report Operation 2>

When the UE cannot identify the new candidate beam that satisfies a certain determination criterion (or not less than a certain threshold), the UE may perform control so as not to perform reporting regarding the new candidate beam.

In other words, when the UE succeeds in identifying the new candidate beam that satisfies a certain determination criterion, the UE transmits the information related to the new candidate beam by using a certain UL resource, resource selection, or the like, or otherwise the UE does not perform reporting of the information related to the new candidate beam.

In this manner, when the new candidate beam cannot be identified, the reporting amount from the UE can be reduced.

### (Variations)

The UE may appropriately use a signal type (or a UL resource type) to be used for UL transmission, according to whether or not the new candidate beam is identified. A case in which a plurality of UL resources (for example, PUCCHs, PUSCHs, and PRACHs) are configured for the UE is assumed.

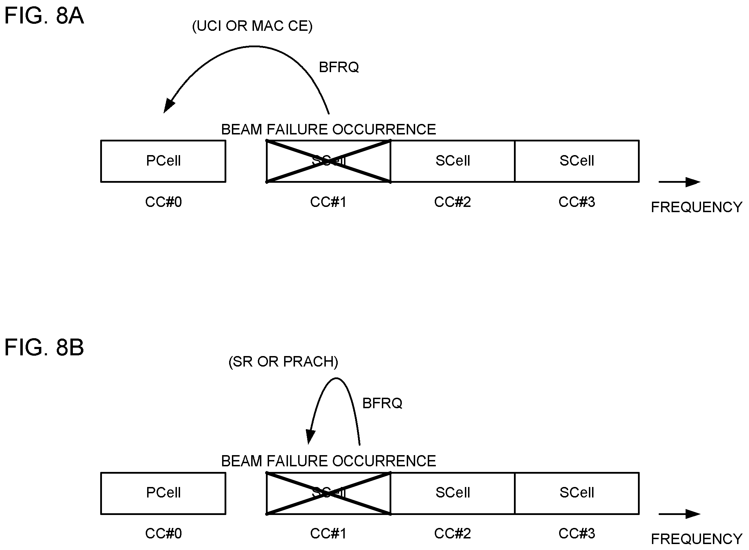

When the UE succeeds in identifying the new candidate beam that satisfies a certain determination criterion (or not less than a certain threshold), the UE transmits the BFRQ as a part of the reporting of the uplink control information or the MAC control information by using the UL resources (for example, the PUCCHs or the PUSCHs) (see FIG. 8A). FIG. 8A shows a case in which a beam failure occurs in the SCell. The UE may transmit the BFRQ to at least one of the PCell and the SCell. In this case, the information indicating the new candidate beam index may also be transmitted.

In contrast, when the UE fails to identify the new candidate beam, the UE may transmit the BFRQ by using other UL resources (for example, SRs (scheduling requests) or PRACHs) (see FIG. 8B). FIG. 8B shows a case in which a beam failure occurs in the SCell. The UE may transmit the BFRQ to at least one of the PCell and the SCell. The UE need not transmit the information related to the index of the new candidate beam.

The base station can appropriately determine whether or not the new candidate beam has been identified in the UE, based on the signal type (or UL the resource type) to be used for transmission of the BFRQ.

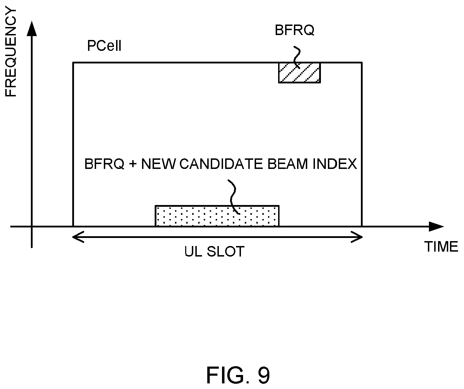

Further, regarding the case in which the UE can identify the new candidate beam and the case in which the UE cannot identify the new candidate beam, the UE may transmit the BFRQ (or BFRQ + new candidate beam index information) by applying different respective UL resource types in the certain cell (for example, the PCell) (see FIG. 9).

In FIG. 9, when the new candidate beam can be identified, the BFRQ is transmitted as a part of the reporting of the uplink control information or the MAC control information by using the PUCCH or the PUSCH in the certain cell. The UE may also transmit the information related to the new candidate beam index. In contrast, when the new candidate beam cannot be identified, the BFRQ may be transmitted by using the SR or the PRACH in the certain cell. The UE need not transmit the information related to the index of the new candidate beam.

The base station can appropriately determine whether or not the new candidate beam has been identified in the UE, based on the signal type (or UL the resource type) to be used for transmission of the BFRQ.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

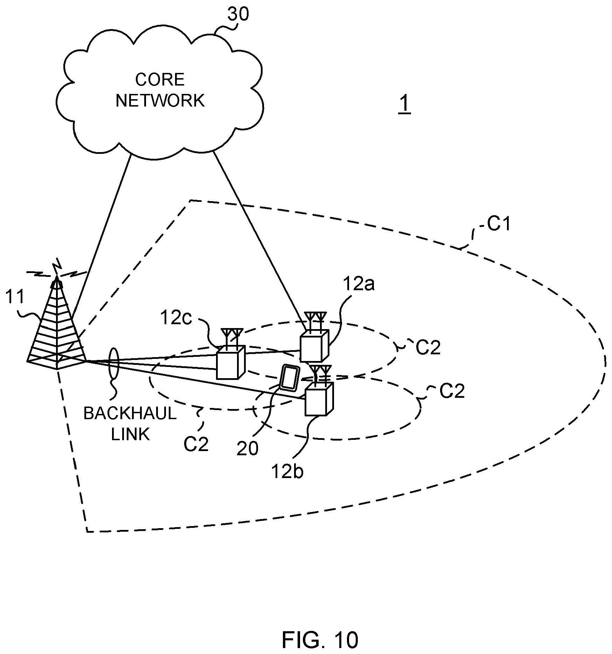

FIG. 10 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

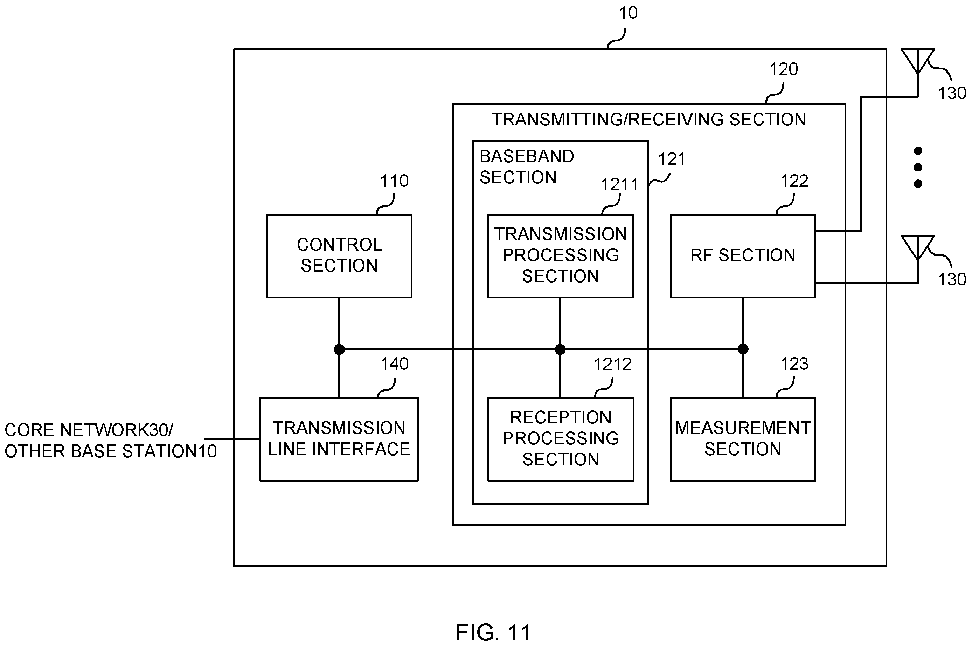

FIG. 11 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive information related to a new candidate beam determined in the UE by using at least one of a plurality of determination criteria configured for the new candidate beam in a beam failure recovery procedure.

The transmitting/receiving section 120 may transmit a reference signal configured for the new candidate beam. When a measurement result based on the reference signal does not satisfy a certain determination criterion, the transmitting/receiving section 120 may receive information indicating that the new candidate beam cannot be identified on the UE side in the beam failure recovery procedure.

When the control section 110 receives the information indicating that the new candidate beam cannot be identified on the UE side, the control section 110 may control the BFR procedure (for example, stopping of the beam recovery procedure) and configuration of a serving cell (for example, deactivation of the SCell), based on the information.

### (User Terminal)

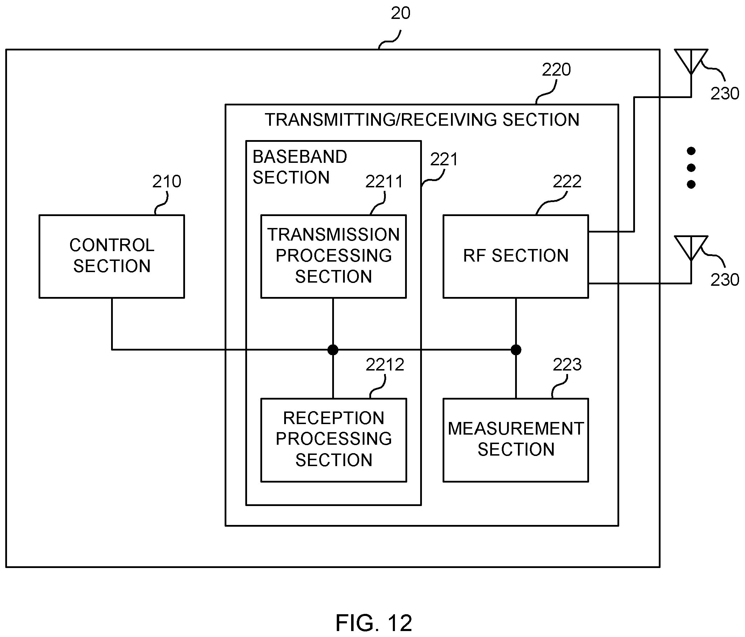

FIG. 12 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211 and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit information related to a new candidate beam determined by using at least one of a plurality of determination criteria configured for the new candidate beam in a beam failure recovery procedure.

The transmitting/receiving section 220 may receive a reference signal configured for the new candidate beam. When a measurement result based on the reference signal does not satisfy a certain determination criterion, the transmitting/receiving section 220 may transmit information indicating that the new candidate beam cannot be identified in the beam failure recovery procedure.

The control section 210 may determine a new candidate beam by using at least one of a plurality of determination criteria configured for the new candidate beam. The plurality of determination criteria may include a first measurement criterion corresponding to received power and a second measurement criterion corresponding to interfere power. In the plurality of determination criteria, a threshold for selecting the new candidate beam may be separately configured.

When at least one determination criterion or a threshold corresponding to at least one determination criterion is not configured, the control section 210 may perform control so as not to transmit information related to the new candidate beam in the beam failure recovery procedure. The control section 210 may determine the new candidate beam by selecting a certain determination criterion, based on certain information transmitted from a base station.

When a measurement result based on the reference signal does not satisfy a certain determination criterion, the control section 210 may perform control so as to transmit information indicating that a new candidate beam cannot be identified or so as not to transmit information related to the new candidate beam in a beam failure recovery procedure.

The control section 210 may perform control so as to report the information indicating that the new candidate beam cannot be identified by using a certain bit state included in certain information, and so as to report information related to an index of the new candidate beam, by using another bit state included in the certain information.

The control section 210 may perform control so as to report the information indicating that the new candidate beam cannot be identified by using a certain cyclic shift index applied to a certain UL channel, and so as to report information related to an index of the new candidate beam by using another cyclic shift index applied to the certain UL channel.

The control section 210 may perform control so as to report information indicating that the new candidate beam cannot be identified by using a certain UL resource, and so as to report information related to an index of the new candidate beam by using another UL resource. The certain UL resource and the other UL resource may be uplink control channels using different formats.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

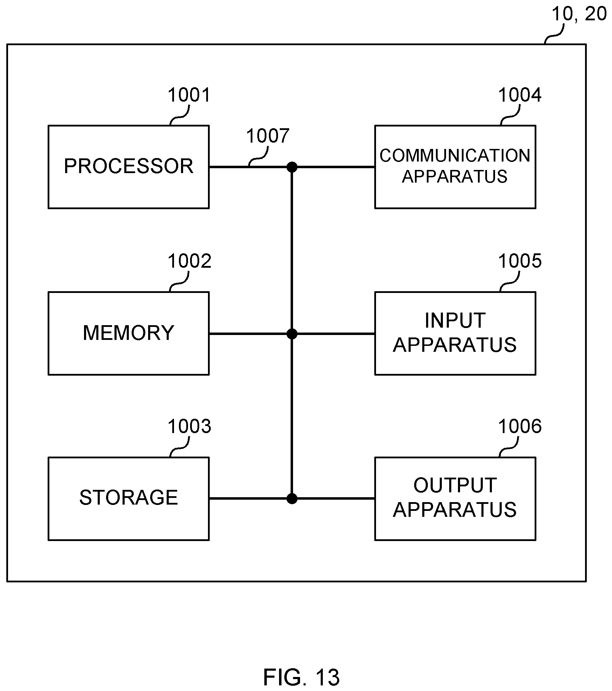

For example, a base station, a user terminal, and so on according to one embodiment of the present disclosure may function as a computer that executes the processes of the radio communication method of the present disclosure. FIG. 13 is a diagram to show an example of a hardware structure of the base station and the user terminal according to one embodiment. Physically, the above-described base station 10 and user terminal 20 may each be formed as computer an apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention is defined by the appended claims. Consequently, the description of the present disclosure is provided only for the purpose of explaining examples, and should by no means be construed to limit the invention according to the present disclosure in any way other than within the scope of the claims.

## Claims

1. A terminal (20) comprising:
a receiving section (220) configured to receive from a base station information related to a reference signal, RS, for a new candidate beam, the RS being used in a beam failure recovery procedure in a secondary cell;
a transmitting section (220) configured to report information to the base station (10) in the beam failure recovery procedure; and
a control section (210) configured to, when the RS whose received power is equal to or greater than a threshold configured by higher layer signaling is identified or when the RS whose received power is equal to or greater than the threshold is not identified, perform control for reporting information to the base station,
wherein at least one of a synchronization signal block, SSB, and channel state information, CSI, is configured as the RS,
when the RS whose received power is equal to or greater than the threshold is identified, the control section (210) is configured to control the transmitting section (220) to report information to the base station indicating a new candidate beam index of the new candidate beam in a bit field of a medium access control control element, MAC CE, and
when the RS whose received power is equal to or greater than the threshold is not identified, the control section (210) is configured to control the transmitting section to report information to the base station indicating that there is no new candidate beam by using a certain bit state in a bit field of a MAC CE.

2. A radio communication method for a terminal (20), comprising:
receiving information from a base station related to a reference signal, RS, for a new candidate beam, the RS being used in a beam failure recovery procedure in a secondary cell;
reporting information to the base station in the beam failure recovery procedure; and
when the RS whose received power is equal to or greater than a threshold configured by higher layer signaling is identified or when the RS whose received power is equal to or greater than the threshold is not identified, performing control for reporting information to the base station,
wherein at least one of a synchronization signal block, SSB, and channel state information, CSI, is configured as the RS,
when the RS whose received power is equal to or greater than the threshold is identified, the performing controls the transmitting to report to the base station information indicating a new candidate beam index of the new candidate beam in a bit field of a medium access control control element, MAC CE, and
when the RS whose received power is equal to or greater than the threshold is not identified, the performing controls the transmitting to report information to the base station indicating that there is no new candidate beam by using a certain bit state in a bit field of a MAC CE.

3. A base station (10) comprising:
a transmitting section (120) configured to transmit, to a terminal (10), information related to a reference signal, RS, for a new candidate beam, the RS being used in a beam failure recovery procedure in a secondary cell;
a receiving section (120) configured to receive information reported by the terminal (20) in the beam failure recovery procedure; and
a control section (110) configured to, when the RS whose received power is equal to or greater than a threshold configured by higher layer signaling is identified in the terminal (20) or when the RS whose received power is equal to or greater than the threshold is not identified in the terminal (20), control a reception of a report of information from the terminal (10),
wherein at least one of a synchronization signal block, SSB, and channel state information, CSI, is configured as the RS in the terminal (20),
when the RS whose received power is equal to or greater than the threshold is identified in the terminal (20), the control section (110) is configured to control the receiving section (120) to receive from the terminal a report of information indicating a new candidate beam index of the new candidate beam in a bit field of a medium access control control element, MAC CE, and
when the RS whose received power is equal to or greater than the threshold is not identified in the terminal (20), the control section (110) is configured to control the receiving section (120) to receive from the terminal a report of information indicating, by using a certain bit state in a bit field of a MAC CE, that there is no new candidate beam.

4. A system comprising a terminal (20) according to claim 1 and a base station (10) according to claim 3.

## Patentansprüche

1. Endgerät (20), umfassend:
einen Empfangsabschnitt (220), der so konfiguriert ist, dass er von einer Basisstation Informationen empfängt, die sich auf ein Referenzsignal, RS, für einen neuen Kandidatenstrahl beziehen, wobei das RS in einem Strahlausfallwiederherstellungsverfahren in einer sekundären Zelle verwendet wird;
einen Sendeabschnitt (220), der so konfiguriert ist, dass er in dem Strahlausfallwiederherstellungsverfahren Informationen an die Basisstation (10) meldet; und
einen Steuerabschnitt (210), der so konfiguriert ist, dass er, wenn das RS, dessen empfangene Leistung gleich oder größer als ein durch eine Signalisierung einer höheren Schicht konfigurierter Schwellenwert ist, identifiziert wird oder wenn das RS, dessen empfangene Leistung gleich oder größer als der Schwellenwert ist, nicht identifiziert wird, eine Steuerung zum Melden von Informationen an die Basisstation durchführt,
wobei mindestens eines von einem Synchronisationssignalblock, SSB, und Kanalzustandsinformationen, CSI, als das RS konfiguriert ist,
wenn das RS, dessen empfangene Leistung gleich oder größer als der Schwellenwert ist, identifiziert wird, der Steuerabschnitt (210) so konfiguriert ist, dass er den Sendeabschnitt (220) so steuert, dass er Informationen an die Basisstation meldet, die einen neuen Kandidatenstrahlindex des neuen Kandidatenstrahls in einem Bitfeld eines Medienzugriffssteuerungs-Steuerungselements, MAC CE, anzeigen, und
wenn das RS, dessen empfangene Leistung gleich oder größer als der Schwellenwert ist, nicht identifiziert wird, der Steuerabschnitt (210) so konfiguriert ist, dass er den Sendeabschnitt so steuert, dass er Informationen an die Basisstation meldet, die anzeigen, dass es keinen neuen Kandidatenstrahl gibt, unter Verwendung eines bestimmten Bit-Zustands in einem Bitfeld eines MAC CE.

2. Funkkommunikationsverfahren für ein Endgerät (20), umfassend:
Empfangen von Informationen von einer Basisstation, die sich auf ein Referenzsignal, RS, für einen neuen Kandidatenstrahl beziehen, wobei das RS in einem Strahlausfallwiederherstellungsverfahren in einer sekundären Zelle verwendet wird;
Melden von Informationen an die Basisstation in dem Strahlausfallwiederherstellungsverfahren; und
wenn das RS, dessen empfangene Leistung gleich oder größer als ein durch eine Signalisierung einer höheren Schicht konfigurierter Schwellenwert ist, identifiziert wird oder wenn das RS, dessen empfangene Leistung gleich oder größer als der Schwellenwert ist, nicht identifiziert wird, Durchführen einer Steuerung zum Melden von Informationen an die Basisstation,
wobei mindestens eines von einem Synchronisationssignalblock, SSB, und Kanalzustandsinformationen, CSI, als das RS konfiguriert ist,
wenn das RS, dessen empfangene Leistung gleich oder größer als der Schwellenwert ist, identifiziert wird, das Durchführen das Senden zum Melden an die Basisstation von Informationen, die einen neuen Kandidatenstrahlindex des neuen Kandidatenstrahls in einem Bitfeld eines Medienzugriffssteuerungs-Steuerungselements, MAC CE, anzeigen, steuert, und
wenn das RS, dessen empfangene Leistung gleich oder größer als der Schwellenwert ist, nicht identifiziert wird, das Durchführen das Senden zum Melden an die Basisstation von Informationen, die anzeigen, dass es keinen neuen Kandidatenstrahl gibt, unter Verwendung eines bestimmten Bitzustands in einem Bitfeld eines MAC CE, steuert.

3. Basisstation (10), umfassend:
einen Sendeabschnitt (120), der so konfiguriert ist, dass er an ein Endgerät (10) Informationen sendet, die sich auf ein Referenzsignal, RS, für einen neuen Kandidatenstrahl beziehen, wobei das RS in einem Strahlausfallwiederherstellungsverfahren in einer sekundären Zelle verwendet wird;
einen Empfangsabschnitt (120), der so konfiguriert ist, dass er Informationen empfängt, die von dem Endgerät (20) in dem Strahlausfallwiederherstellungsverfahren gemeldet werden; und
einen Steuerabschnitt (110), der so konfiguriert ist, dass er, wenn das RS, dessen empfangene Leistung gleich oder größer als ein durch eine Signalisierung einer höheren Schicht konfigurierter Schwellenwert ist, in dem Endgerät (20) identifiziert wird oder wenn das RS, dessen empfangene Leistung gleich oder größer als der Schwellenwert ist, nicht in dem Endgerät (20) identifiziert wird, einen Empfang einer Meldung von Informationen von dem Endgerät (10) steuert,
wobei mindestens einer von einem Synchronisationssignalblock, SSB, und Kanalzustandsinformationen, CSI, als das RS in dem Endgerät (20) konfiguriert ist,
wenn das RS, dessen empfangene Leistung gleich oder größer als der Schwellenwert ist, in dem Endgerät (20) identifiziert wird, der Steuerabschnitt (110) so konfiguriert ist, dass er den Empfangsabschnitt (120) so steuert, dass er von dem Endgerät eine Meldung mit Informationen empfängt, die einen neuen Kandidatenstrahlindex des neuen Kandidatenstrahls in einem Bitfeld eines Medienzugriffssteuerungs-Steuerungselements, MAC CE, anzeigen, und
wenn das RS, dessen empfangene Leistung gleich oder größer als der Schwellenwert ist, nicht in dem Endgerät (20) identifiziert wird, der Steuerabschnitt (110) so konfiguriert ist, dass er den Empfangsabschnitt (120) so steuert, dass er von dem Endgerät eine Meldung mit Informationen empfängt, die unter Verwendung eines bestimmten Bit-Zustands in einem Bitfeld eines MAC CE anzeigen, dass es keinen neuen Kandidatenstrahl gibt.

4. System, umfassend ein Endgerät (20) nach Anspruch 1 und eine Basisstation (10) nach Anspruch 3.

## Revendications

1. Terminal (20) comprenant :
une section de réception (220) configurée pour recevoir à partir d'une station de base
des informations relatives à un signal de référence, RS, pour un nouveau faisceau candidat, le RS étant utilisé dans une procédure de reprise après défaillance de faisceau dans une cellule secondaire ;
une section de transmission (220) configurée pour rapporter des informations à la station de base (10) dans la procédure de reprise après défaillance de faisceau ; et
une section de commande (210) configurée pour, lorsque le RS dont la puissance reçue est égale ou supérieure à un seuil configuré par une signalisation de couche supérieure est identifié ou lorsque le RS dont la puissance reçue est égale ou supérieure au seuil n'est pas identifié, réaliser une commande permettant de rapporter des informations à la station de base,
dans lequel au moins un d'un bloc de signaux de synchronisation, SSB, et d'informations d'état de canal, CSI, est configuré en tant que le RS,
lorsque le RS dont la puissance reçue est égale ou supérieure au seuil est identifié, la section de commande (210) est configurée pour commander la section de transmission (220) de manière à rapporter à la station de base des informations indiquant un nouvel indice de faisceau candidat du nouveau faisceau candidat dans un champ de bits d'un élément de commande de commande d'accès au support, MAC CE, et
lorsque le RS dont la puissance reçue est égale ou supérieure au seuil n'est pas identifié, la section de commande (210) est configurée pour commander la section d'émission de manière à rapporter à la station de base des informations
indiquant qu'il n'y a pas de nouveau faisceau candidat en utilisant un certain état binaire dans un champ de bits d'un MAC CE.

2. Procédé de communication radio pour un terminal (20), comprenant :
la réception, à partir d'une station de base, d'informations relatives à un signal de référence, RS, pour un nouveau faisceau candidat, le RS étant utilisé dans une procédure de reprise après défaillance de faisceau dans une cellule secondaire ;
le rapport d'informations à la station de base dans la procédure de reprise après défaillance de faisceau ; et
lorsque le RS dont la puissance reçue est égale ou supérieure à un seuil configuré par une signalisation de couche supérieure est identifié ^{ou} lorsque le RS dont la puissance reçue est égale ou supérieure au seuil n'est pas identifié, la réalisation d'une commande permettant de rapporter des informations à la station de base,
dans lequel au moins un d'un bloc de signaux de synchronisation, SSB, et d'informations d'état de canal, CSI, est configuré en tant que le RS,
lorsque le RS dont la puissance reçue est égale ou supérieure au seuil est identifié, la réalisation de commandes de la transmission pour rapporter à la station de base des informations indiquant un nouvel indice de faisceau candidat du nouveau faisceau candidat dans un champ de bits d'un élément de commande d'accès au support, MAC CE ; et
lorsque le RS dont la puissance reçue est égale ou supérieure au seuil n'est pas identifié, la réalisation de commandes de la transmission pour rapporter à la station de base des informations indiquant qu'il n'y a pas de nouveau faisceau candidat en utilisant un certain état binaire dans un champ de bits d'un MAC CE.

3. Station de base (10) comprenant :
une section de transmission (120) configurée pour transmettre, à un terminal (10), des informations relatives à un signal de référence, RS, pour un nouveau faisceau candidat, le RS étant utilisé dans une procédure de reprise après défaillance de faisceau dans une cellule secondaire ;
une section de réception (120) configurée pour recevoir des informations rapportées par le terminal (20) dans la procédure de reprise après défaillance de faisceau ; et
une section de commande (110) configurée pour, lorsque le RS dont la puissance reçue est égale ou supérieure à un seuil configuré par une signalisation de couche supérieure est identifié dans le terminal (20) ou lorsque le RS dont la puissance reçue est égale ou supérieure au seuil n'est pas identifié dans le terminal (10), commander une réception d'un rapport d'informations à partir du terminal (20), dans laquelle au moins un d'un bloc de signaux de synchronisation, SSB, et d'informations d'état de canal, CSI, est configuré en tant que le RS dans le terminal (20),
lorsque le RS dont la puissance reçue est égale ou supérieure au seuil est identifié dans le terminal (20), la section de commande (110) est configurée pour commander la section de réception (120) de manière à recevoir du terminal un rapport d'informations indiquant un nouvel indice de faisceau candidat du nouveau faisceau candidat dans un champ de bits d'un élément de commande de commande d'accès au support, MAC CE, et
lorsque le RS dont la puissance reçue est égale ou supérieure au seuil n'est pas identifié dans le terminal (20), la section de commande (110) est configurée pour commander la section de réception (120) de manière à recevoir du terminal un rapport d'informations indiquant, en utilisant un certain état binaire dans un champ de bits d'un MAC CE, qu'il n'y a pas de nouveau faisceau candidat.

4. Système comprenant un terminal (20) selon la revendication 1 et une station de base (10) selon la revendication 3.
